# EUROPÄISCHE PATENTSCHRIFT

(11) **EP 0 826 725 B1**
(45) Veröffentlichungstag und Bekanntmachung des Hinweises auf die Patenterteilung: **24.11.1999**
(21) Anmeldenummer: 97114545.3
(22) Anmeldetag: 22.08.1997
(51) Int. Cl.: C08K 5/15, C08K 5/00, C08L 75/04, C08J 3/22

(54) **Stabilisierte Polyurethane**
Stabilized polyurethanes
Polyuréthanes stabilisés

(30) Priorität: 03.09.1996 DE 19635713
(43) Veröffentlichungstag der Anmeldung: 04.03.1998
(73) Patentinhaber: BASF AKTIENGESELLSCHAFT, 67056 Ludwigshafen (DE)
(72) Erfinder: Prissok, Frank, 49448 Lemförde (DE); Scholz, Günter, 49448 Lemförde (DE)

(56) Entgegenhaltungen:
- EP-A- 0 447 668
- EP-A- 0 475 108
- EP-A- 0 564 931

## Beschreibung

Die Erfindung betrifft stabilisierte Polyurethane, vorzugsweise thermoplastische Polyurethane, die spezielle Stabilisatoren als Stabilisatorkombination oder als Stabilisatorkonzentrat enthalten, sowie ein Verfahren zur Herstellung von Polyurethanen unter Einsatz dieser Stabilisatoren.

Zellige oder kompakte Polyurethane, insbesondere Polyurethan-Gießelelastomere und thermoplastische Polyurethane (TPU), sind seit langem aus zahlreichen Patent- und Literaturveröffentlichungen bekannt. Ihre technische Bedeutung beruht auf der Kombination hochwertiger mechanischer Eigenschaften mit den Vorteilen der kostengünstigen Verarbeitungsmethoden. Durch die Verwendung verschiedenartiger chemischer Aufbaukomponenten in unterschiedlichen Mengenverhältnissen können thermoplastisch verarbeitbare oder vernetzte, kompakte oder zellige Polyurethane hergestellt werden, die sich hinsichtlich ihrer Verarbeitbarkeit und ihren mechanischen Eigenschaften vielfältig unterscheiden. Eine Übersicht über Polyurethane, ihre Eigenschaften und Anwendungen, wird z.B. im Kunststoff-Handbuch, Band 7, Polyurethane, 1. Auflage, 1966, herausgegeben von Dr. R. Vieweg und Dr. A. Höchtlen, und 2. Auflage, 1983, sowie 3. Auflage, 1993, herausgegeben von Dr. G. Oertel, (Carl-Hanser-Verlag, München, Wien), gegeben.

Polyurethan-Gießelelastomere können durch Einbringen, z.B. durch Gießen oder Einspritzen, einer Reaktionsmischung in ein offenes oder geschlossenes Formwerkzeug und ihre Aushärtung erhalten werden.

TPU können kontinuierlich oder diskontinuierlich nach verschiedenen Verfahren hergestellt werden. Als die bekanntesten werden das sogenannte Bandverfahren und das Extruderverfahren auch technisch genutzt.

Nach der GB-A-1 057 018 wird aus einer im wesentlichen linearen Polyhydroxylverbindung und überschüssigem organischen Diisocyanat ein Prepolymeres hergestellt, das über eine Dosierpumpe einem Mischkopf zugeführt und dort mit einer bestimmten Menge eines niedermolekularen Diols gemischt wird. Das erhaltene Reaktionsgemisch wird auf ein Förderband gebracht und durch einen auf 70 bis 130°C erhitzten Ofen geführt, bis es erstarrt. Das Reaktionsprodukt wird danach zerkleinert, bei Temperaturen bis 120°C 6 bis 40 Stunden getempert und kann so z.B. mit Spritzgußmaschinen zu Formkörpern verarbeitet werden.

Beim Extruderverfahren, das z.B. in der DE-A-20 59 570 (US-A-3 642 964) beschrieben wird, werden die Aufbaukomponenten direkt in den Extruder eingebracht und die Reaktion im Extruder unter bestimmten Verfahrensbedingungen durchgeführt. Das gebildete Polyurethan-Elastomere wird in den thermoplastischen Zustand übergeführt, als Strang extrudiert, in einer Inertgasatmosphäre bis zum Erstarren abgekühlt und zerkleinert. Nachteilig an diesem Verfahren ist, daß die erhaltenen TPU nicht für die Herstellung von Folien oder von feinen Profilen und Schläuchen geeignet sind. TPU gleicher Zusammensetzung sind nach dem Extruderverfahren transparent, während die nach dem Bandverfahren ein opakes Aussehen aufweisen. Opake TPU können zu Folien verarbeitet werden, die kein Blocken zeigen, während transparente TPU hierfür ungeeignet sind.

Zur Herstellung der Polyurethane können die an sich bekannten Aufbaukomponenten, wie Di- und Polyisocyanate, höhermolekulare Polyhydroxylverbindungen, niedermolekulare Kettenverlängerungs- und Vernetzungsmitteln sowie weitere Hilfs- und Zusatzstoffe, Verwendung finden.

Unstabilisiertes Polyurethan ist gegenüber Wärme und UV-Bestrahlung empfindlich, es neigt zu Oxidationsreaktionen. Hauptsächliche Angriffspunkte sind bei beiden Polyurethantypen die oft aromatische Systeme enthaltenden Isocyanatkomponenten sowie bei Polyetherpolyurethanen die Etherbindungen, die mit Hilfe von Luftsauerstoff zu Peroxiden oxidiert werden können; bei den Polyesterpolyurethanen sind es die Esterbindungen, die im Wesentlichen durch H+ Ionen angegriffen werden.

Zur Vermeidung dieser Nachteile werden den Polyurethan-Elastomeren oder den Aufbaukomponenten zu ihrer Herstellung Stabilisatoren einverleibt. Als Hydrolyseschutzmittel bewährt haben sich beispielsweise Carbodiimide (W. Goyert und H. Hespe, TPU-Eigenschaften und Anwendungen; Kunststoffe 68 (1978), Seiten 819 ff). Als geeignete Stabilisatoren gegen Thermooxidation werden Antioxidantien, wie z.B. 4,4'-Thio-bis(3-methyl-6-tert.butylphenol), Phenothiazine und 2,2-Thio-bis-(4-methyl-6-isobornylphenol), beschrieben. Als UV-Stabilisatoren werden z.B. substituierte Resorcine, Salicylate, Benzotriazole und Benzophenone eingesetzt. Verwendet werden ferner Stabilisatorkombinationen aus einem UV-Stabilisator und einem Antioxidants, z.B. aus 2(2'-Hydroxy-3',5'-di-tert.amyl)benzotriazol und Tetrakis [methylen-3-(3',5'-di-tert. butyl-4'-hydroxyphenyl)propionat]methan. (Advances in Urethane Science and Technology, Volume 4, Seiten 68 ff, und Volume 6, Seiten 103 ff;®Technomic Publishing Co.) Nach Angaben der DD-A-238 992 finden epoxidierte synthetische Produkte, wie epoxidierte Triglyceride, Alkylepoxistearate, -phthalate, -tetrahydrophthalate oder epoxidierte Naturprodukte wie epoxidiertes Sojaöl, Rüböl, Rapsöl u. dgl. Verwendung als Hydrolysestabilisator für PU-Elastomere auf der Grundlage von Polyester-polyolen. Nach Angaben der EP-A-262 527 (US-A-4775558) können gegebenenfalls zellige Polyurethane, die mit anderen Werkstoffen, wie z.B. PVC, ABS, Co- und Homopolymerisaten von Vinylchlorid, Styrol, Butadien, Isopren, Chloropren, Ethylen, Propen oder Acrylnitril, Polyvinylacetat oder Polyvinylbutyral, verbunden oder konfektioniert werden, durch den Zusatz von Epoxiden, vorzugsweise höherfunktionellen Epoxiden mit einem Epoxidäquivalentgewicht von 57 bis 10000, gegen Thermolyse und Kontaktverfärbung stabilisiert werden. Durch den Zusatz von Epoxiden zur Herstellung von PU-Elastomeren, das Aufbringen von Polyurethanen auf Epoxidwerkstoffen oder durch Mischung von Polyurethanen mit Epoxidharzen können Kunststoffe mit verbesserten mechanischen Eigenschaften erhalten werden. Obgleich durch den Zusatz von Stabilisatoren die mechanischen Eigenschaften der hergestellten Polyurethan-Elastomeren beträchtlich verbessert werden konnten, erfüllen diese vielfach immer noch nicht, insbesondere für spezielle Anwendungsbereiche, die an sie gestellten hohen mechanischen Anforderungen.

Nach EP-A-0 564 931 wird eine Stabilisatorkombination aus Triglycidylisocyanurat und einem Benztriazol als Konzentrat mit einem TPU beschrieben. Nachteilig für viele Anwendungen ist, daß das Triglycidylisocyanurat bei der Verarbeitung des TPU zu unerwünschten Vernetzungsreaktionen führt.

Der vorliegenden Erfindung lag daher die Aufgabe zugrunde, ein Polyurethan zu entwickeln, das neben guten mechanischen Eigenschaften eine gute Beständigkeit insbesondere gegen UV- und thermischen Abbau besitzt, wobei die Stabilisatoren keine bzw. keine wesentliche Vernetzung verursachen.

Diese Aufgabe wurde erfindungsgemäß dadurch gelöst, daß man zur Stabilisierung des Polyurethans Diglycidylterephthalat und/oder Triglycidyltrimellitat in Kombination mit UV-Filtern einsetzt.

Gegenstand der Erfindung ist demzufolge ein stabilisiertes Polyurethan, das als Stabilisator Diglycidylterephthalat und/oder Triglycidyltrimellitat in Kombination mit UV-Filtern enthält.

Gegenstände der Erfindung sind weiterhin ein Stabilisatorkonzentrat, bestehend aus, bezogen auf das Gesamtgewicht,
A) 20 bis 95 Gew.-% mindestens eines thermoplastischen Polyurethans,
B) 3 bis 60 Gew.-% Diglycidylterephthalat und/oder Triglycidyltrimellitat und
C) 3 bis 60 Gew.-% mindestens eines UV-Filters vom Benztriazoltyp
sowie Verfahren zur Herstellung stabilisierter Polyurethane, durch Umsetzung von organischen und / oder modifizierten organischen Polyisocyanaten mit höhermolekularen Verbindungen mit mindestens zwei reaktiven Wasserstoffatomen und gegebenenfalls niedermolekularen Kettenverlängerungs- und/oder Vernetzungsmitteln sowie Treibmitteln im Beisein von Katalysatoren, Stabilisatoren sowie gegebenenfalls weiteren Hilfsmitteln und/oder Zusatzstoffen, die dadurch gekennzeichnet sind, daß als Stabilisatoren die genannten Stabilisatorkombinationen oder -konzentrate eingesetzt werden.

Überraschenderweise wurde gefunden, daß Polyurethane, insbesondere TPU, durch den Zusatz von Diglycidylterephthalat und/ oder Triglycidyltrimellitat in Kombination mit UV-Filtern, vorzugsweise vom Benztriazoltyp, eine sehr gute Beständigkeit gegen Wärmealterung und UV-Bestrahlung zeigt. Es wird ein synergistischer Effekt der Wirkungen der Stabilisatorsubstanzen beobachtet, wodurch besonders die Stabilisierung gegen UV-Bestrahlung weiter verbessert wird. Das erfindungsgemäße System weist eine Verringerung der Vernetzungserscheinungen bei hochkonzentrierten Anwendungen auf.

Als UV-Filter werden vorzugsweise solche des Benztriazoltyps eingesetzt. Insbesondere bevorzugt werden 2-(2-Hydroxy-3,5-di-tert. amyl-phenyl)-2H-benztriazol und/oder 1,6-Hexandiyl-bis [3(3-benztriazol-N-yl)-4-hydroxy-5-tert. butyl]phenyl-propanoat. Einsetzbar sind aber auch andere UV-Absorber, wie beispielsweise Phenol, 2-(2H-benzotriazole-2-yl)-4-methyl-6-dodecyl, 2,2'-Methylen-bis(6-{2H-benzotriazol-2-yl}-4-{1,1,3,3,-tetramethylbutyl}-phenol und 2-(2H-Benzotriazol-2-yl)-4,6-bis(1,1-dimethylethyl)phenol.

Besonders vorteilhaft und deshalb vorzugsweise eingesetzt wird als Stabilisator eine Kombination aus Diglycidylterephthalat, Triglycidyltrimellitat und 2-(2-Hydroxy-3,5-di-tert. amylphenyl)-2H-benztriazol.

Die Stabilisatorkombination ist, bezogen auf das Polyurethan, vorzugsweise in einer Menge von insgesamt 0,01 bis 3 Gew.-%, besonders bevorzugt von 0,1 bis 1,5 Gew.-%, enthalten. In einer besonders vorteilhaften Ausführungsform werden die einzelnen Bestandteile Diglycidylterephthalat, Triglycidyltrimellitat und UV-Filter dabei in einem Verhältnis von 1 zu 1 zu 2 bis 1 zu 1 zu 1 eingesetzt.

Eine Vernetzungsreaktion bei der Verarbeitung der Polyurethane tritt auch bei deutlich mehr als 1 Gew.-% Epoxidgehalt als Stabilisator nicht ein.

Die erfindungsgemäßen, stabilisierten Polyurethane werden in üblicher Weise durch Umsetzung von organischen und/oder modifizierten organischen Polyisocyanaten (a) mit höhermolekularen Verbindungen mit mindestens zwei reaktiven Wasserstoffatomen (b) und gegebenenfalls niedermolekularen Kettenverlängerungs - und/ oder Vernetzungsmitteln (c) im Beisein von Stabilisatoren (d) und Katalysatoren (e) sowie gegebenenfalls weiteren Hilfsmitteln und/ oder Zusatzstoffen (f) hergestellt, wobei als Stabilisatoren (d) Diglycidylterephthalat und/oder Triglycidyltrimellitat in Kombination mit UV-Filtern wie oben beschrieben eingesetzt werden.

Die Stabilisatorkomponenten können bei der Herstellung der Polyurethane in üblicher Weise einzeln, gleichzeitig oder nacheinander oder als ganze oder teilweise Kombination zugegeben werden.

Besonders vorteilhaft ist es aber, zunächst ein Stabilisatorkonzentrat, bestehend aus, bezogen auf das Gesamtgewicht,
A) 20 bis 95 Gew.-% mindestens eines thermoplastischen Polyurethans,
B) 3 bis 60 Gew.-% Diglycidylterephthalat und/oder Triglycidyltrimellitat und
C) 3 bis 60 Gew.-% mindestens eines oben beschriebenen UV-Filters,
zu fertigen.

Das Stabilisatorkonzentrat ist leicht herstellbar, gut dosierbar und einfach handhabbar.

Die erfindungsgemäßen, stabilisierten Polyurethane werden auch in diesem Falle durch Umsetzung von organischen und/oder modifizierten organischen Polyisocyanaten (a) mit höhermolekularen Verbindungen mit mindestens zwei reaktiven Wasserstoffatomen (b) und gegebenenfalls niedermolekularen Kettenverlängerungs - und/oder Vernetzungsmitteln (c) im Beisein von Stabilisatoren (d) und Katalysatoren (e) sowie gegebenenfalls weiteren Hilfsmitteln und / oder Zusatzstoffen (f) hergestellt, wobei aber als Stabilisator (d) ein Stabilisatorkonzentrat, bestehend aus, bezogen auf das Gesamtgewicht,
A) 20 bis 95 Gew.-% mindestens eines thermoplastischen Polyurethans,
B) 3 bis 60 Gew.-% Diglycidylterephthalat und/oder Triglycidyltrimellitat und
C) 3 bis 60 Gew.-% mindestens eines UV-Filters,
eingesetzt wird.

Für die erfindungsgemäße Stabilisierung eignen sich prinzipiell alle Polyurethane. Besonders vorteilhafte Ergebnisse haben sich bei TPU, insbesondere bei Einsatz des Stabilisatorkonzentrates, ergeben.

Um den Stabilisierungseffekt der Stabilisatorkonzentrate nicht durch die Polyurethan-Elastomermatrix zu beeinträchtigen, werden zu ihrer Herstellung zweckmäßigerweise TPU (A) mit einer Härte im Bereich von Shore A 78 bis Shore A 98, vorzugsweise von Shore A 80 bis A 88, verwendet, die erhaltenen werden durch Umsetzung
eines organischen Diisocyanats, vorzugsweise 4,4'-Diphenylmethandiisocyanat mit
einer Polyhydroxylverbindung mit einem Molekulargewicht von 800 bis 3000, vorzugsweise von 1000 bis 2500, aus der Gruppe der Polyoxybutylen-glykole, Polybutandiol-1,4- adipate, Polyhexandiol-1,6-adipate und Polybutandiol-1,4-hexandiol-1,6-adipate und
einem Alkandiol mit 2 bis 6 Kohlenstoffatomen, vorzugsweise 4 bis 6 Kohlenstoffatomen, insbesondere Butandiol-1,4, als Kettenverlängerungsmittel.

Zur Herstellung der erfindungsgemäßen Stabilisatorkonzentrate haben sich insbesondere nach dem Bandverfahren hergestellte TPU (A) bewährt.

Die Stabilisatoren (B) und (C) werden in dem vorgenannten Prozentbereich zweckmäßigerweise in einem Gewichtsverhältnis von 0,5:1 bis 1:0,5 und vorzugsweise von 1:1 verwendet.

Aus produktionstechnischer Sicht vorzüglich handhabbar erwies sich ein UV-Stabilisatorkonzentrat, das bestand aus, bezogen auf das Gesamtgewicht,
A) 50 bis 80 Gew.-% mindestens eines TPU,
B) 10 bis 25 Gew.-% Diglycidylterephthalat und/oder Triglycidyltrimellitat und
C) 10 bis 25 Gew.-% 2-(2-Hydroxy-3,5-di-tert. amyl-phenyl)-2H-benztriazol.

Insbesondere Verwendung findet ein Stabilisatorkonzentrat aus 75 Gew.-% (A), 12,5 Gew.-% (B) und 12,5 Gew.-% (C).

Ausgenommen die erfindungsgemäßen Stabilisatorkomponenten, werden sowohl für die Herstellung der stabilisierten Polyurethane als auch bei der Herstellung des für das Stabilisatorkonzentrat notwendigen Polyurethans A) die in der Polyurethanchemie üblichen Ausgangskomponenten eingesetzt.
a) Als organische und/oder modifizierte organische Polyisocyanate kommen insbesondere aliphatische, cycloaliphatische oder vorzugsweise aromatische Diisocyanate in Betracht. Im einzelnen seien beispielhaft genannt: aliphatische Diisocyanate, wie Hexamethylen-diisocyanat-1,6, 2-Methyl-pentamethylen-diisocyanat-1,5, 2-Ethyl-butylen-diisocyanat-1,4 oder Mischungen aus mindestens zwei der genannten aliphatischen Diisocyanate; cycloaliphatische Diisocyanate, wie Isophorondiisocyanat, 1,4-Cyclohexan-diisocyanat, 1-Methyl-2,4- oder -2,6-cyclohexan-diisocyanat sowie die entsprechenden Isomerengemische, 4,4'-, 2,4'- und 2,2'-Dicyclohexylmethan-diisocyanat sowie die entsprechenden Isomerengemische; und vorzugsweise aromatische Diisocyanate, wie 2,4-Toluylen-diisocyanat, Gemische aus 2,4- und 2,6-Toluylen-diisocyanat, 4,4'-, 2,4'- und 2,2'-Diphenylmethan-diisocyanat, Gemische aus 2,4'- und 4,4'-Diphenylmethan-diisocyanat, urethanmodifizierte flüssige 4,4'- und/oder 2,4'-Diphenylmethan-diisocyanate, 4,4'-Diisocyanato-diphenylethan-1,2, Gemische aus 4,4'-, 2,4'- und 2,2'-Diisocyanato-diphenylethan-1,2, vorteilhafterweise solche mit einem 4,4'-Diisocyanato-diphenylethan-1,2-Gehalt von mindestens 95 Gew.%, und 1,5-Naphthylendiisocyanat. Vorzugsweise verwendet werden Diphenylmethandiisocyanat-Isomerengemische mit einem 4,4'-Diphenylmethandiisocyanatgehalt von größer als 96 Gew.% und insbesondere im wesentlichen reines 4,4'-Diphenylmethan-diisocyanat.
   Die organischen Diisocyanate können gegebenenfalls in untergeordneten Mengen, z.B. in Mengen bis zu 3 Mol.%, vorzugsweise bis zu 1 Mol%, bezogen auf das organische Diisocyanat, durch ein tri- oder höherfunktionelles Polyisocyanat ersetzt werden, wobei dessen Menge jedoch so begrenzt werden muß, daß noch thermoplastisch verarbeitbare Polyurethane erhalten werden. Eine größere Menge an derartigen mehr als difunktionellen Isocyanaten wird zweckmäßigerweise durch die Mitverwendung von weniger als difunktionellen Verbindungen mit reaktiven Wasserstoffatomen ausgeglichen, so daß eine zu weit gehende chemische Vernetzung des Polyurethans vermieden wird. Beispiele für mehr als difunktionelle Isocyanate sind Mischungen aus Diphenylmethan-diisocyanaten und Polyphenyl-polymethylen-polyisocyanaten, sog. Roh-MDI, sowie flüssige, mit Isocyanurat-, Harnstoff-, Biuret-, Allophanat-, Urethan- und/oder Carbodiimidgruppen modifizierte 4,4'- und/oder 2,4'-Diphenylmethan-diisocyanate. Als geeignete monofunktionelle Verbindungen mit reaktivem Wasserstoffatom, die auch als Molekulargewichtsregler verwendbar sind, seien z.B. genannt: Monoamine wie z.B. Butyl-, Dibutyl-, Octyl-, Stearyl-, N-Methylstearylamin, Pyrrolidon, Piperidin und Cyclohexylamin, und Monoalkohole wie z.B. Butanol, Amylalkohol, 1-Ethylhexanol, Octanol, Dodecanol, Cyclohexanol und Ethylenglykolmonoethylether.
   Insbesondere kommen jedoch zur Anwendung: (i) Carbodiimid- und/oder Urethangruppen enthaltende Polyisocyanate aus 4,4'-Diphenylmethan-diisocyanat oder einer Mischung aus 4,4'- und 2,4'-Diphenylmethan-diisocyanaten mit einem NCO-Gehalt von 33,6 bis 8 Gew.%, (ii) NCO-Gruppen enthaltende Prepolymere mit einem NCO-Gehalt von 8 bis 25 Gew.%, bezogen auf das Prepolymergewicht, hergestellt durch Umsetzung von Polyoxyalkylen-polyolen mit einer Funktionalität von 2 bis 4 und einem Molekulargewicht von 600 bis 6000 mit 4,4'-Diphenylmethan-diisocyanat oder einer Mischung aus 4,4'- und 2,4'-Diphenylmethan-diisocyanaten und Mischungen aus (i) und (ii).
b) Als höhermolekulare Verbindungen mit mindestens zwei reaktiven Wasserstoffatomen können beispielsweise solche mit einer Funktionalität von 2 bis 4 und Molekulargewichten von 500 bis 8000 Verwendung finden. Bewährt haben sich besonders Polyetherdiole und insbesondere Polyesterdiole. Eingesetzt wird beispielsweise Polybutadiendiole, mit dem gute Ergebnisse insbesondere bei der Herstellung von vernetzbaren TPU erzielt werden. In Betracht kommen daneben auch andere hydroxylgruppenhaltige Polymere mit Ether- oder Estergruppen in der Polymerkette, beispielsweise Polyacetale, wie Polyoxymethylene, und vor allem wasserunlösliche Formale, z.B. Polybutandiolformal und Polyhexandiolformal, und Polycarbonate, insbesondere solche aus Diphenylcarbonat und Hexandiol-1,6, hergestellt durch Umesterung. Die Polyhydroxylverbindungen sollten zumindest überwiegend linear sein und müssen im Sinne der Isocyanatreaktion im wesentlichen difunktionell aufgebaut sein. Die genannten Polyhydroxylverbindungen können als Einzelkomponenten oder in Form von Mischungen zur Anwendung kommen.
   Geeignete Polyetherdiole können nach bekannten Verfahren, beispielsweise durch anionische Polymerisation von Alkylenoxiden mit Alkalihydroxiden, wie Natrium- oder Kaliumhydroxid, oder Alkalialkoholaten, wie Natriummethylat, Natrium- oder Kaliumethylat oder Kaliumisopropylat, als Katalysatoren und unter Zusatz mindestens eines Startermoleküls, das 2 bis 3, vorzugsweise 2, reaktive Wasserstoffatome gebunden enthält, oder durch kationische Polymerisation mit Lewis-Säuren, wie Antimonpentachlorid, Borfluorid-Etherat u.a., oder Bleicherde als Katalysatoren aus einem oder mehreren Alkylenoxiden mit 2 bis 4 Kohlenstoffatomen im Alkylenrest hergestellt werden.
   Geeignete Alkylenoxide sind beispielsweise Tetrahydrofuran, 1,3-Propylenoxid, 1,2- bzw. 2,3-Butylenoxid und insbesondere bevorzugt Ethylenoxid und 1,2-Propylenoxid. Die Alkylenoxide können einzeln, alternierend nacheinander oder als Mischungen verwendet werden. Als Startermoleküle kommen beispielsweise in Betracht: Wasser, organische Dicarbonsäuren, wie Bernsteinsäure, Adipinsäure und/oder Glutarsäure, Alkanolamine, wie z.B. Ethanolamin, N-Alkylalkanolamine, N-Alkyl-dialkanolamine, wie z.B. N-Methyl- und N-Ethyl-diethanolamin und vorzugsweise zweiwertige, gegebenenfalls Etherbrücken gebunden enthaltende Alkohole, wie z.B. Ethandiol, Propandiol-1,2 und -1,3, Butandiol-1,4, Diethylenglykol, Pentandiol-1,5, Hexandiol-1,6, Dipropylenglykol, 2-Methylpentandiol-1,5 und 2-Ethyl-butandiol-1,4. Die Startermoleküle können einzeln oder als Gemische eingesetzt werden.
   Vorzugsweise verwendet werden Polyetherole aus 1,2-Propylenoxid und Ethylenoxid, in denen mehr als 50 %, vorzugsweise 60 bis 80 % der OH-Gruppen primäre Hydroxylgruppen sind und bei denen zumindest ein Teil des Ethylenoxids als endständiger Block angeordnet ist. Derartige Polyetherole können erhalten werden, indem man z.B. an das Startermolekül zunächst das 1,2-Propylenoxid und daran anschließend das Ethylenoxid polymerisiert oder zunächst das gesamte 1,2-Propylenoxid im Gemisch mit einem Teil des Ethylenoxids copolymerisiert und den Rest des Ethylenoxids anschließend anpolymerisiert oder schrittweise zunächst einen Teil des Ethylenoxids, dann das gesamte 1,2-Propylenoxid und dann den Rest des Ethylenoxids an das Startermolekül anpolymerisiert.
   Insbesondere geeignet sind ferner die hydroxylgruppenhaltigen Polymerisationsprodukte des Tetrahydrofurans.
   Die im wesentlichen linearen Polyetherole besitzen üblicherweise Molekulargewichte von 500 bis 8000, vorzugsweise 600 bis 6000 und insbesondere 800 bis 3500, wobei die Polyoxytetramethylen-glykole bevorzugt Molekulargewichte von 500 bis 2800 aufweisen. Sie können sowohl einzeln als auch in Form von Mischungen untereinander zur Anwendung kommen.
   Geeignete Polyesterdiole können beispielsweise aus Dicarbonsäuren mit 2 bis 12, vorzugsweise 4 bis 6, Kohlenstoffatomen und Diolen hergestellt werden. Als Dicarbonsäuren kommen beispielsweise in Betracht: aliphatische Dicarbonsäuren, wie Bernsteinsäure, Glutarsäure, Adipinsäure, Korksäure, Azelainsäure und Sebacinsäure, und aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung, verwendet werden. Zur Herstellung der Polyesterole kann es gegebenenfalls vorteilhaft sein, anstelle der Dicarbonsäuren die entsprechenden Dicarbonsäurederivate, wie Dicarbonsäuremono- oder -diester mit 1 bis 4 Kohlenstoffatomen im Alkoholrest, Dicarbonsäureanhydride oder Dicarbonsäuredichloride zu verwenden. Beispiele für die Diole sind Glykole mit 2 bis 10, vorzugsweise 2 bis 6 Kohlenstoffatomen, wie Ethylenglykol, Diethylenglykol, Butandiol-1,4, Pentandiol-1,5, Hexandiol-1,6, Decandiol-1,10, 2,2-Dimethylpropandiol-1,3, Propandiol-1,3 und Dipropylenglykol. Je nach den gewünschten Eigenschaften können die Diole allein oder gegebenenfalls in Mischungen untereinander verwendet werden.
   Geeignet sind ferner Ester der Kohlensäure mit den genannten Diolen, insbesondere solchen mit 4 bis 6 Kohlenstoffatomen, wie Butandiol-1,4 und/oder Hexandiol-1,6; Kondensationsprodukte von ω-Hydroxycarbonsäuren, beispielsweise ω-Hydroxycapronsäure, und vorzugsweise Polymerisationsprodukte von Lactonen, beispielsweise gegebenenfalls substituiertem ε-Caprolacton.
   Als Polyesterdiole vorzugsweise verwendet werden Ethandiol-polyadipate, 1,4-Butandiol-polyadipate, Ethandiol-1,4-butandiol-polyadipate, 1,6-Hexandiol-neopentylglykol-polyadipate, 1,6-Hexandiol-1,4-butandiol-polyadipate und Polycaprolactone.
   Die Polyesterdiole besitzen in der Regel Molekulargewichte von 500 bis 6000, vorzugsweise von 800 bis 3500.
c) Als Kettenverlängerungsmittel mit Molekulargewichten im allgemeinen von 60 bis 400, vorzugsweise 60 bis 300, kommen vorzugsweise aliphatische Diole mit 2 bis 12 Kohlenstoffatomen, vorzugsweise mit 2, 4 oder 6 Kohlenstoffatomen, wie z.B. Ethandiol, Hexandiol-1,6, Diethylenglykol, Dipropylenglykol und insbesondere Butandiol-1,4 in Betracht. Geeignet sind jedoch auch Diester der Terephthalsäure mit Glykolen mit 2 bis 4 Kohlenstoffatomen, wie z.B. Terephthalsäure-bis-ethylenglykol oder -butandiol-1,4 und Hydroxyalkylenether des Hydrochinons, wie z.B. 1,4-Di-(β-hydroxyethyl)-hydrochinon sowie Polytetramethylenglykole mit Molekulargewichten von 162 bis 378.
   Je nach den gewünschten Eigenschaften der erfindungsgemäßen Polyurethane können die eingesetzten Mengen der Aufbaukomponenten (b) und (c) in relativ breiten molaren Verhältnissen variiert werden. Bei den vorzugsweise herzustellenden TPU können dadurch Härte und Schmelzindex eingestellt werden, wobei die Härte und die Schmelzviskosität mit zunehmendem Gehalt an Kettenverlängerungsmittel (c) ansteigt, während der Schmelzindex abnimmt.
   Zur Herstellung von weicheren TPU, z.B. solchen mit einer Härte Shore A von kleiner als 95, vorzugsweise von 95 bis 75 Shore A, können beispielsweise die im wesentlichen difunktionellen Polyhydroxylverbindungen (b) und Diole (c) vorteilhafterweise in Molverhältnissen von 1:1 bis 1:5, vorzugsweise 1:1,5 bis 1:4,5 verwendet werden, so daß die resultierenden Mischungen aus (b) und (c) ein Hydroxyläquivalentgewicht von größer als 200, und insbesondere von 230 bis 450, besitzen, während zur Herstellung von härteren TPU, z.B. solchen mit einer Härte Shore A von größer als 98, vorzugsweise von 55 bis 75 Shore D, die Molverhältnisse von (b):(c) im Bereich von 1:5,5 bis 1:15, vorzugsweise von 1:6 bis 1:12, liegen, so daß die erhaltenen Mischungen aus (b) und (c) ein Hydroxyläquivalentgewicht von 110 bis 200, vorzugsweise von 120 bis 180, aufweisen.
d) Als Stabilisatoren gegen UV- und thermischen Abbau werden insbesondere die oben beschriebenen erfindungsgemäßen Stabilisatoren, Stabilisatorkombinationen bzw. Stabilisatorkonzentrate eingesetzt.
   Daneben können aber auch andere, in der Polyurethanchemie übliche Stabilisatoren als weitere Hilfsmittel und Zusatzstoffe (f) zur Anwendung kommen.
e) Geeignete Katalysatoren für die Herstellung der erfindungsgemäßen Polyurethane, welche insbesondere die Reaktion zwischen den NCO-Gruppen der Diisocyanate (a) und den Hydroxylgruppen der Aufbaukomponenten (b) und (c) beschleunigen, sind die nach dem Stand der Technik bekannten und üblichen Katalysatoren, wie tertiäre Amine, z.B. Triethylamin, Dimethylcyclohexylamin, N-Methylmorpholin, N,N'-Dimethylpiperazin, Diazabicyclo-(2,2,2)-octan und ähnliche, sowie insbesondere organische Metallverbindungen wie Titansäureester, Eisenverbindungen, Zinnverbindungen, z.B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Die Katalysatoren werden üblicherweise in Mengen von 0,001 bis 0,1 Gew.-Teilen pro 100 Gew.-Teilen der Mischung aus Polyhydroxylverbindung (b) und Kettenverlängerungsmittel (c) eingesetzt.
f) Daneben können den Aufbaukomponenten bei der Herstellung der erfindungsgemäßen Polyurethane noch weitere Hilfsmittel und/ oder Zusatzstoffe zugegeben werden. Genannt seien beispielsweise Treibmittel, Gleitmittel, Inhibitoren, Stabilisatoren gegen Hydrolyse oder Verfärbung, Farbstoffe, Pigmente, anorganische und/oder organische Füllstoffe und Verstärkungsmittel.
   Diese Hilfsmittel und/oder Zusatzstoffe können hierzu in die Aufbaukomponenten oder in die Reaktionsmischung zur Herstellung der Polyurethane eingebracht werden. Nach einer anderen Verfahrensvariante können diese Hilfsmittel und/oder Zusatzstoffe (f) mit dem Polyurethan gemischt und, insbesondere bei TPU, anschließend verschmolzen werden oder sie werden direkt der Schmelze einverleibt.
   Die verwendbaren Hilfsmittel oder Zusatzstoffe können der Fachliteratur, beispielsweise der Monographie von J.H. Saunders und K.C. Frisch "High Polymers", Band XVI, Polyurethane, Teil 1 und 2 (Verlag Interscience Publishers 1962 bzw. 1964), dem Kunststoff-Handbuch, Band 7, Polyurethane 1. 2. und 3. Auflage (Carl Hanser Verlag, 1966, 1983 bzw. 1993) oder der DE-A-29 01 774 entnommen werden.

Zur Herstellung der erfindungsgemäßen Polyurethane werden die Aufbaukomponenten (a), (b) und gegebenenfalls (c) in Gegenwart der erfindungsgemäßen Stabilisatoren (d) und von Katalysatoren (e) und gegebenenfalls Hilfsmitteln und/ oder Zusatzstoffen (f) in solchen Mengen zur Reaktion gebracht, daß das Äquivalenzverhältnis von NCO-Gruppen der Diisocyanate (a) zur Summe der Hydroxylgruppen der Komponenten (b) und (c) 0,95 bis 1,20:1, vorzugsweise 0,98 bis 1,08:1 und insbesondere ungefähr 1,0 bis 1,05:1 beträgt.

Zur Herstellung der erfindungsgemäßen Stabilisatorkonzentrate, insbesondere auf TPU-Basis, werden die Stabilisatoren (B) und (C) nacheinander oder vorzugsweise gleichzeitig dem ausreagierten, mindestens fließfähigen, vorzugsweise geschmolzenen TPU (A) bei einer Temperatur von 170 bis 220°C, vorzugsweise von 180 bis 200°C einverleibt. Als geeignete Verarbeitungsvorrichtungen hierfür seien beispielhaft genannt: Walzwerke, Kneter und vorzugsweise Extruder, insbesondere Zweiwellenextruder. Die erhaltenen UV-Stabilisatorkonzentrate können danach zwischengelagert oder direkt granuliert werden, wobei die Granulatpartikel zweckmäßigerweise einen durchschnittlichen Teilchendurchmesser von kleiner als 6 mm, vorzugsweise von 2 bis 4 mm aufweisen.

Die erfindungsgemäßen Stabilisatorkonzentrate finden bevorzugt Verwendung zur Stabilisierung von an sich bekannten, nach dem Extruder- oder Bandverfahren aus üblichen Ausgangsstoffen hergestellten TPU gegen UV- und Thermoabbau.

Hierzu werden die UV-Stabilisatorkonzentrate in einer Menge von 0,5 bis 12 Gew.-Teilen, vorzugsweise von 1 bis 10 Gew.-Teilen und insbesondere von 2 bis 5 Gew.-Teilen pro 100 Gew.-Teilen TPU, vorzugsweise in Form von Granulaten, bei Temperaturen von 10 bis 220°C intensiv gemischt und die Stabilisatorkonzentrat-TPU-Mischung wird danach bei Temperaturen von 170 bis 2200C, vorzugsweise von 180 bis 210°C thermoplastisch verarbeitet, z.B. nach dem Blasverfahren zu Folien oder dem Spritzgußverfahren zu Formkörpern. Nach einer anderen Verfahrensvariante können die UV-Stabilisatorkonzentrate auch, z.B. mit Hilfe eines Extruders, direkt in die TPU-Schmelze eingebracht, homogen gemischt und zu einem Formkörper extrudiert werden.

Die Erfindung wird an nachstehenden Beispielen näher erläutert:

### Beispiele V1 bis V4 und B1 bis B4

1000 Gew.-Teile Polytetrahydrofuran mit einem mittleren Molekulargewicht von 1000 wurden mit 600 Gew.-Teilen 4,4'-MDI und 121 Gew.-Teilen Butan-(1,4)-diol zu einem TPU umgesetzt und dabei mit den in Tabelle 1 aufgeführten Komponenten versetzt.

**Tabelle 1**

| Beispiel Nr. | Diglycidylterephthalat | Triglycidyltrimellitat | Antioxidans* | Benztriazol* |
|---|---|---|---|---|
| Vergleich V1 | - | - | - | - |
| Vergleich V2 | - | - | 1 % | - |
| Vergleich V3 | - | - | 1 % | 1 % |
| Vergleich V4 | 0,5 % | 0,5 % | 1 % | - |
| Beispiel B1 | 0,125 % | 0,125 % | 1 % | 0,25 % |
| Beispiel B2 | 0,25 % | 0,25 % | 1 % | 0,5 % |
| Beispiel B3 | 0,625 % | 0,625 % | 1 % | 0,75 % |
| Beispiel B4 | 0,5 % | 0,5 % | 1 % | 1 % |

| | | | | |
|---|---|---|---|---|
| Benztriazol* 2-(2-Hydroxy-3,5-di-tert.amyl-phenyl)-2H-benztriazol Antioxidans* Pentaerythril-tetrakis-[3-(3,5-di-tert.butyl-4-hydroxyphenyl)-pro-pionat] | | | | |

V1 und B3 wurden im Handguß-Verfahren ausgeführt. Die Stabilisatoren wurden dabei direkt zugegeben und intensiv eingemischt. Das Reaktionsprodukt wurde zu Prüfkörpern verarbeitet. Die übrigen Beispiele wurden nach dem Bandverfahren ausgeführt. Das Antioxidans wurde, soweit verwendet, bei der Herstellung des TPU untergemischt. Die erfindungsgemäßen Stabilisatoren wurden hier in Form eines Konzentrats zugegeben.

### Herstellung des erfindungsgemäßen Stabilisatorkonzentrates:

75 Gew.-Teile eines TPU, erhalten nach dem Bandverfahren durch Umsetzung von Polytetrahydrofuran, 4,4'-MDI und Butan-(1,4)-diol in den oben angegebenen Mengen wurden in einem Extruder aufgeschmolzen und bei 200°C mit
6,25 Gew.-Teilen Diglycidylterephthalat,
6,25 Gew.-Teilen Triglycidyltrimellitat und
12,5 Gew.-Teilen des oben definierten Benztriazols
intensiv gemischt. Die homogene Mischung wurde extrudiert und granuliert.

Das Stabilisatorkonzentrat wurde dem oben beschriebenen TPU-Ansatz in folgenden Mengen zugegeben und homogen eingemischt:
B1 2 Gew.-Teile
B2 4 Gew.-Teile
B4 8 Gew.-Teile

Das Reaktionsprodukt wurde zu Prüfkörpern verarbeitet.

Es wurden dabei Produkte mit den aus den Tabellen 2 bis 4 ersichtlichen Ergebnissen erhalten.

**Tabelle 2**

| Eigenfarbe der Produkte | | | | |
|---|---|---|---|---|
| Beispiel Nr. | YI | L* | A* | B* |
| Vergleich V1 | 3,6 | 96,6 | -0,4 | 1,6 |
| Vergleich V2 | 3,0 | 46,1 | -0,4 | 1,8 |
| Vergleich V3 | 4,9 | 96,2 | -1,1 | 3,3 |
| Vergleich V4 | 3,6 | 96,1 | -0,5 | 2,2 |
| Beispiel B1 | 4,8 | 95,8 | -0,6 | 3,0 |
| Beispiel B2 | 7,7 | 95,0 | -1,1 | 4,8 |
| Beispiel B3 | 10,6 | 94,6 | -1,3 | 6,7 |
| Beispiel B4 | 11,9 | 94,4 | -1,4 | 7,5 |

| | | | | |
|---|---|---|---|---|
| YI Yellowness Index | | | | |
| L*A*B* Farbwerte des CIELAB Systems | | | | |

**Tabelle 3**

| Eigenschaften nach 500 Stunden Lagerung bei 130°C im Umluftofen | | | | |
|---|---|---|---|---|
| Beispiel Nr. | ZF/MPa | BD/% | DE* | YI |
| Vergleich V1 | 10 | 380 | 99,8 | 204,1 |
| Vergleich V2 | 18 | 830 | 78,3 | 107,9 |
| Vergleich V3 | 17 | 710 | 81,2 | 108,5 |
| Vergleich V4 | 29 | 730 | 60,1 | 89,1 |
| Beispiel B1 | 21 | 770 | 79,4 | 111,1 |
| Beispiel B2 | 20 | 780 | 72,2 | 105,8 |

| Beispiel Nr. | ZF/MPa | BD/% | DE* | YI |
|---|---|---|---|---|
| Beispiel B3 | 23 | 810 | 67,3 | 102,5 |
| Beispiel B4 | 25 | 730 | 68,6 | 106,1 |
| ZF Zugfestigkeit DIN 53 504 | | | | |
| BD Bruchdehnung DIN 53 504 | | | | |
| DE*Delta E* des LAB* Farbsystems (Farbänderung gegenüber unbelichteter Probe) | | | | |
| YI Yellowness Index | | | | |

Kleine DE* und YI Werte zeigen eine geringe Verfärbung bzw. Vergilbung an.

**Tabelle 4**

| Eigenschaften nach UV Belichtung nach DIN 75202 (100°C Schwarztafeltemp.) | | | | |
|---|---|---|---|---|
| Beispiel Nr. | DE* 300 h | YI 300 h | DE* 500 h | YI 500 h |
| Vergleich V1 | 35,1 | 58,0 | 50,1 | 78,2 |
| Vergleich V2 | 29,6 | 47,2 | 42,4 | 64,2 |
| Vergleich V3 | 19,8 | 37,0 | 28,7 | 42,1 |
| Vergleich V4 | 21,8 | 35,9 | 27,6 | 44,4 |
| Beispiel B1 | 16,0 | 28,7 | 22,4 | 38,2 |
| Beispiel B2 | 12,0 | 25,5 | 16,4 | 32,0 |
| Beispiel B3 | 8,1 | 22,4 | 11,7 | 27,6 |
| Beispiel B4 | 7,9 | 23,3 | 11,0 | 26,9 |

In V1 bis V4 zeigte V1 (ohne jegliche Stabilisatoren) nach Wärmelagerung sehr schlechte mechanische Kennwerte. Das Material war unbrauchbar. Bei Einsatz von Antioxidans verbesserten sich die mechanischen Werte, es traten aber starke Verfärbungen nach dem UV-Test auf.

In B1 bis B4 wurden durch optimale Kombination der Stabilisatoren gute mechanische Kennwerte erreicht. Es trat nur eine geringe Verfärbung nach UV-Belichtung durch Eintreten synergistischer Effekte bei Epoxid/Benztriazol-Anwendung auf, deutlich besser als bei V3 (nur Benztriazol in Verbindung mit Antioxidans). Im Handguß-Verfahren (B3) stellten sich trotz guter Eigenschaften der Endprodukte als nachteilig die Dosierung der Festprodukte (Staub) sowie die nicht so flexible Handhabung der Produkte heraus.

### Beispiele V5 und B5

1000 Gew.-Teile Polytetrahydrofuran mit einem mittleren Molekulargewicht von 1000 wurden mit 1100 Gew.-Teilen 4,4'-MDI und 306 Gew.-Teilen Butan-(1,4)-diol im Handguß-Verfahren zu einem TPU umgesetzt und dabei in B5 mit den in Tabelle 5 aufgeführten Komponenten versetzt. Das Reaktionsprodukt wurde zu Prüfkörpern verarbeitet.

Die erhaltenen optischen und mechanischen Kennwerte sind in den Tabellen 6 bis 8 dargestellt.

### Beispiele V6 und B6

1000 Gew.-Teile Polytetrahydrofuran mit einem mittleren Molekulargewicht von 1000 wurden mit 1200 Gew.-Teilen 4,4'-MDI und 342 Gew.-Teilen Butan-(1,4)-diol sowie der in Tabelle 5 angegebenen Menge Antioxidans im Bandverfahren zu einem TPU umgesetzt. Dabei wurde in B6 ein Stabilisatorkonzentrat in einer Menge von 4 Gew.-%, bezogen auf den Gesamtansatz, zugegeben und homogen eingemischt, das analog dem oben (zu den Beispielen B1, B2 und B4) beschriebenen Stabilisatorkonzentrat hergestellt wurde, aber unter Verwendung des für V6/B6 eingesetzten TPU. Das Reaktionsprodukt wurde zu Prüfkörpern verarbeitet.

Die erhaltenen optischen und mechanischen Kennwerte sind in den Tabellen 6 bis 8 dargestellt.

### Beispiele V7 und B7

1000 Gew.-Teile eines Butandiol/Hexandiol-Adipats mit einem mittleren Molekulargewicht von 2000 wurden mit 425 Gew.-Teilen 4,4'-MDI, 10 Gew.-Teilen eines Carbodiimides als Hydrolyseschutz und 106 Gew.-Teilen Butan-(1,4)-diol sowie der in Tabelle 5 angegebenen Menge Antioxidans im Bandverfahren zu einem TPU umgesetzt. Dabei wurde in B7 ein Stabilisatorkonzentrat in einer Menge von 4 Gew.-%, bezogen auf den Gesamtansatz, zugegeben und homogen eingemischt, das analog dem oben (zu den Beispielen B1, B2 und B4) beschriebenen Stabilisatorkonzentrat hergestellt wurde, aber unter Verwendung des für V7/B7 eingesetzten TPU. Das Reaktionsprodukt wurde zu Prüfkörpern verarbeitet.

Die erhaltenen optischen und mechanischen Kennwerte sind in den Tabellen 6 bis 8 dargestellt

### Beispiele V8 und B8

1000 Gew.-Teile eines Ethylenglykol/Butandiol-Adipats mit einem mittleren Molekulargewicht von 2000 wurden mit 440 Gew.-Teilen 4,4'-MDI, 10 Gew.-Teilen eines Carbodiimides als Hydrolyseschutz und 110 Gew.-Teilen Butan-(1,4)-diol im Handguß-Verfahren zu einem TPU umgesetzt und dabei mit den in Tabelle 5 aufgeführten Komponenten versetzt. Das Reaktionsprodukt wurde zu Prüfkörpern verarbeitet.

Die erhaltenen optischen und mechanischen Kennwerte sind in den Tabellen 6 bis 8 dargestellt.

**Tabelle 5**

| Beispiel Nr. | Diglycicylterephthalat | Triglycidyitrimellitat | Antioxidans* | Benztriazol* |
|---|---|---|---|---|
| Vergleich V5 | - | - | - | - |
| Beispiel B5 | 0,25 | 0,25 | - | 0,5 % |
| Vergleich V6 | - | - | 0,5 % | - |
| Beispiel B6 | 0,25 | 0,25 | 0,5 % | 0,5 % |
| Vergleich V7 | - | - | 0,5 % | - |
| Beispiel B7 | 0,25 | 0,25 | 0,5 % | 0,5 % |
| Vergleich V8 | - | - | 0,5 % | - |
| Beispiel B8 | 0,25 | 0,25 | 0,25 % | 0,5 % |

| | | | | |
|---|---|---|---|---|
| Benztriazol* 2-(2-Hydroxy-3,5-di-tert.amyl-phenyl)-2H-benztriazol Antioxidans* Pentaerythrityl-tetrakis- [3-(3,5-di-tert.butyl-4-hydroxyphenyl)-propionat] | | | | |

**Tabelle 6**

| Eigenfarbe der Produkte | | | | |
|---|---|---|---|---|
| Beispiel Nr. | YI | L* | A* | B* |
| Vergleich V5 | 2,2 | 96,7 | -0,5 | 1,4 |
| Beispiel B5 | 6,5 | 95,9 | -1,1 | 4,3 |
| Vergleich V6 | 3,5 | 95,9 | -0,2 | 2,0 |
| Beispiel B6 | 11,3 | 90,8 | -0,4 | 6,4 |
| Vergleich V7 | 2,6 | 95,9 | -0,1 | 1,4 |
| Beispiel B7 | 9,0 | 89,2 | 0,1 | 4,7 |
| Vergleich V8 | 1,6 | 96,6 | -0,1 | 0,9 |
| Beispiel B8 | 9,1 | 90,0 | -0,1 | 5,0 |

| | | | | |
|---|---|---|---|---|
| YI Yellowness Index | | | | |
| L*A*B* Farbwerte des CIELAB Systems | | | | |

**Tabelle 7**

| Eigenschaften nach 500 Std. Lagerung bei 130°C im Umluftofen | | | | |
|---|---|---|---|---|
| Beispiel Nr. | ZF/MPa | BD/% | DE* | YI |
| Vergleich V5 | 25 | 330 | 107,5 | 147,7 |
| Beispiel B5 | 25 | 360 | 104,2 | 146,1 |
| Vergleich V6 | 29 | 330 | 106,2 | 148,3 |
| Beispiel B6 | 34 | 490 | 49,7 | 84,3 |
| Vergleich V7 | 38 | 770 | 34,1 | 53,9 |
| Beispiel B7 | 43 | 790 | 30,1 | 47,0 |
| Vergleich V8 | 41 | 820 | 37,2 | 56,2 |
| Beispiel B8 | 44 | 790 | 22,3 | 44,4 |
| ZF Zugfestigkeit DIN 53 504 | | | | |
| BD Bruchdehnung DIN 53 504 | | | | |
| DE* Delta E* des LAB* Farbsystems (Farbänderung gegenüber unbelichteter Probe) | | | | |
| YI Yellowness Index | | | | |

Kleine DE* und YI Werte zeigen eine geringe Verfärbung bzw. Vergilbung an.

**Tabelle 8**

| Eigenschaften nach UV Belichtung nach DIN 75202 (100°C Schwarztafeltemperatur) | | |
|---|---|---|
| Beispiel Nr. | DE* 300 h | YI 300 h |
| Vergleich V5 | 27,6 | 43,5 |
| Beispiel B5 | 15,1 | 29,2 |
| Vergleich V6 | 28,9 | 46,9 |
| Beispiel B6 | 5,7 | 21,4 |
| Vergleich V7 | 46,8 | 66,8 |
| Beispiel B7 | 9,0 | 23,1 |
| Vergleich V8 | 44,0 | 65,6 |
| Beispiel B8 | 17,8 | 36,6 |

Die erfindungsgemäß zusätzlich eingebrachten Additive bewirken eine deutliche Verbesserung der UV-Beständigkeit.

## Patentansprüche

1. Stabilisierte Polyurethane, dadurch gekennzeichnet, daß sie als Stabilisator Diglycidylterephthalat und/oder Triglycidyltrimellitat in Kombination mit UV-Filtern enthalten.

2. Stabilisierte Polyurethane nach Anspruch 1, dadurch gekennzeichnet, daß als UV-Filter solche des Benztriazoltyps enthalten sind.

3. Stabilisierte Polyurethane nach Anspruch 1 oder 2, dadurch gekennzeichnet, daß als UV-Filter 2-(2-Hydroxy-3,5-di-tert. amyl-phenyl)-2H-benztriazol und/oder 1,6-Hexandiyl-bis[3(3-benztriazol-N-yl)-4-hydroxy-5-tert. butyl]phenylpropanoat enthalten sind.

4. Stabilisierte Polyurethane nach einem der Ansprüche 1 bis 3, dadurch gekennzeichnet, daß sie als Stabilisator eine Kombination aus Diglycidylterephthalat, Triglycidyltrimellitat und 2-(2-Hydroxy-3,5-di-tert. amyl-phenyl)-2H-benztriazol enthalten.

5. Stabilisierte Polyurethane nach einem der Ansprüche 1 bis 4, dadurch gekennzeichnet, daß die Stabilisatorkombination, bezogen auf das Polyurethan, in einer Menge von insgesamt 0,01 bis 3 Gew.-% enthalten ist.

6. Stabilisatorkonzentrat, bestehend aus, bezogen auf das Gesamtgewicht,
A) 20 bis 95 Gew.-% mindestens eines thermoplastischen Polyurethans,
B) 3 bis 60 Gew.-% Diglycidylterephthalat und/oder Triglycidyltrimellitat und
C) 3 bis 60 Gew.-% mindestens eines UV-Filters vom Benztriazoltyp, wobei sich die Gew.-% insgesamt auf 100 ergänzen.

7. Stabilisatorkonzentrat nach Anspruch 6, dadurch gekennzeichnet, daß als UV-Filter 2-(2-Hydroxy-3,5-di-tert. amylphenyl)-2H-benztriazol und/oder 1,6-Hexandiyl-bis[3(3-benztriazol-N-yl)-4-hydroxy-5-tert. butyl]phenyl-propanoat enthalten sind.

8. Stabilisatorkonzentrat nach Anspruch 6 oder 7, dadurch gekennzeichnet, daß das Polyurethan ein thermoplastisches Polyurethan ist.

9. Verfahren zur Herstellung stabilisierter Polyurethane, durch Umsetzung von organischen und / oder modifizierten organischen Polyisocyanaten mit höhermolekularen Verbindungen mit mindestens zwei reaktiven Wasserstoffatomen und gegebenenfalls niedermolekularen Kettenverlängerungs - und / oder Vernetzungsmitteln sowie Treibmitteln im Beisein von Katalysatoren, Stabilisatoren sowie gegebenenfalls weiteren Hilfsmitteln und / oder Zusatzstoffen, dadurch gekennzeichnet, daß als Stabilisatoren Diglycidylterephthalat und/oder Triglycidyltrimellitat in Kombination mit UV-Filtern eingesetzt werden.

10. Verfahren zur Herstellung stabilisierter Polyurethane, durch Umsetzung von organischen und / oder modifizierten organischen Polyisocyanaten mit höhermolekularen Verbindungen mit mindestens zwei reaktiven Wasserstoffatomen und gegebenenfalls niedermolekularen Kettenverlängerungs - und / oder Vernetzungsmitteln sowie Treibmitteln im Beisein von Katalysatoren, Stabilisatoren sowie gegebenenfalls weiteren Hilfsmitteln und / oder Zusatzstoffen, dadurch gekennzeichnet, daß ein Stabilisatorkonzentrat, bestehend aus, bezogen auf das Gesamtgewicht,
A) 20 bis 95 Gew.-% mindestens eines thermoplastischen Polyurethans,
B) 3 bis 60 Gew.-% Diglycidylterephthalat und/oder Triglycidyltrimellitat und
C) 3 bis 60 Gew.-% mindestens eines UV-Filters vom Benztriazoltyp
eingesetzt wird, wobei sich die Gew.-% insgesamt auf 100 ergänzen.

## Claims

1. A stabilized polyurethane comprising as stabilizer diglycidyl terephthalate and/or triglycidyl trimellitate in combination with UV filters.

2. A stabilized polyurethane as claimed in claim 1, wherein UV filters of the benzotriazole type are present.

3. A stabilized polyurethane as claimed in claim 1 or 2, wherein 2-(2-hydroxy-3,5-di-tert-amylphenyl)-2H-benzotriazole and/or 1,6-hexanediyl bis[3-(3-{benzotriazol-N-yl}-4-hydroxy-5-tert-butylphenyl)propanoate] are present as UV filters.

4. A stabilized polyurethane as claimed in any of claims 1 to 3, wherein the stabilizer present is a combination of diglycidyl terephthalate, triglycidyl trimellitate and 2-(2-hydroxy-3,5-di-tert-amylphenyl)-2H-benzotriazole.

5. A stabilized polyurethane as claimed in any of claims 1 to 4, wherein the stabilizer combination is present in a total amount of from 0.01 to 3% by weight, based on the polyurethane.

6. A stabilizer concentrate consisting of, based on the total weight,
A) from 20 to 95% by weight of at least one thermoplastic polyurethane,
B) from 3 to 60% by weight of diglycidyl terephthalate and/or triglycidyl trimellitate and
C) from 3 to 60% by weight of at least one UV filter of the benzotriazole type, where the percentages by weight add up to a total of 100.

7. A stabilizer concentrate as claimed in claim 6, wherein 2-(2-hydroxy-3,5-di-tert-amylphenyl)-2H-benzotriazole and/or 1,6-hexanediyl bis[3-(3-{benzotriazol-N-yl}-4-hydroxy-5-tert-butylphenyl)propanoate] are present as UV filters.

8. A stabilizer concentrate as claimed in claim 6 or 7, wherein the polyurethane is a thermoplastic polyurethane.

9. A process for preparing stabilized polyurethanes by reacting organic and/or modified organic polyisocyanates with relatively high molecular weight compounds containing at least two reactive hydrogen atoms and, if desired, low molecular weight chain extenders and/or crosslinkers and also blowing agents in the presence of catalysts, stabilizers and, if desired, further auxiliaries and/or additives, wherein diglycidyl terephthalate and/or triglycidyl trimellitate in combination with UV filters are used as stabilizers.

10. A process for preparing stabilized polyurethanes by reacting organic and/or modified organic polyisocyanates with relatively high molecular weight compounds containing at least two reactive hydrogen atoms and, if desired, low molecular weight chain extenders and/or crosslinkers and also blowing agents in the presence of catalysts, stabilizers and, if desired, further auxiliaries and/or additives, wherein a stabilizer concentrate consisting of, based on the total weight,
A) from 20 to 95% by weight of at least one thermoplastic polyurethane,
B) from 3 to 60% by weight of diglycidyl terephthalate and/or triglycidyl trimellitate and
C) from 3 to 60% by weight of at least one UV filter of the benzotriazole type,
where the percentages by weight add up to a total of 100%, is used.

## Revendications

1. Polyuréthanes stabilisés caractérisés en ce qu'ils contiennent, à titre de stabilisateur, du téréphtalate de diglycidyle et/ou du trimellitate de triglycidyle en combinaison avec des filtres éliminant l'ultraviolet.

2. Polyuréthanes stabilisés selon la revendication 1, caractérisés en ce qu'ils contiennent, à titre de filtres éliminant l'ultraviolet, ceux du type du benzotriazole.

3. Polyuréthanes stabilisés selon la revendication 1 ou 2, caractérisés en ce qu'ils contiennent, à titre de filtres éliminant l'ultraviolet, le 2-(2-hydroxy-3,5-di-tert.-amylphényl)-2H-benzotriazole et/ou le 1,6-hexanediyl-bis[3(3-benzotriazol-N-yl)-4-hydroxy-5-tert.-butyl]phénylpropanoate.

4. Polyuréthanes stabilisés selon l'une quelconque des revendications 1 à 3, caractérisés en ce qu'ils contiennent, à titre de stabilisateur, une combinaison de téréphtalate de diglycidyle, de trimellitate de triglycidyle et du 2-(2-hydroxy-3,5-di-tert.-amylphényl)-2H-benzotriazole.

5. Polyuréthanes stabilisés selon l'une quelconque des revendications 1 à 4, caractérisés en ce qu'ils contiennent la combinaison de stabilisateurs, rapportés aux polyuréthanes, en une quantité totale de 0,01 à 3% en poids.

6. Concentrat de stabilisateurs constitué par, rapportés au poids total,
A) à concurrence de 20 à 95% en poids, au moins un polyuréthane thermoplastique,
B) à concurrence de 3 à 60% en poids, du téréphtalate de diglycidyle et/ou du trimellitate de triglycidyle, et
C) à concurrence de 3 à 60% en poids, au moins un filtre éliminant l'ultraviolet du type du benzotriazole, les pour cent en poids se complétant pour donner 100.

7. Concentrat de stabilisateurs selon la revendication 6, caractérisé en ce qu'il contient, à titre de filtre éliminant l'ultraviolet, le 2-(2-hydroxy-3,5-di-tert.-amylphényl)-2H-benzotriazole et/ou le 1,6-hexanediyl-bis[3(3-benzotriazol-N-yl)-4-hydroxy-5-tert.-butyl]phénylpropanoate.

8. Concentrat de stabilisateurs selon la revendication 6 ou 7, caractérisé en ce que le polyuréthane est un polyuréthane thermoplastique.

9. Procédé pour la préparation de polyuréthanes stabilisés, par mise en réaction de polyisocyanates organiques et/ou organiques modifiés avec des composés à poids moléculaires élevés contenant au moins deux atomes d'hydrogène réactif et le cas échéant avec des agents d'allongement de chaînes et/ou des agents de réticulation à bas poids moléculaires et avec des agents moussants en présence de catalyseurs, de stabilisateurs et le cas échéant d'autres adjuvants et/ou d'autres additifs, caractérisé en ce qu'on met en oeuvre, à titre de stabilisateurs, du téréphtalate de diglycidyle et/ou du trimellitate de triglycidyle en combinaison avec des filtres éliminant l'ultraviolet.

10. Procédé pour la préparation de polyuréthanes stabilisés par mise en réaction de polyisocyanates organiques et/ou organiques modifiés avec des composés à poids moléculaires élevés contenant au moins deux atomes d'hydrogène réactif et le cas échéant avec des agents d'allongement de chaînes et/ou des agents de réticulation à bas poids moléculaires et avec des agents moussants en présence de catalyseurs, de stabilisateurs et le cas échéant d'autres adjuvants et/ou d'autres additifs, caractérisé en ce qu'on met en oeuvre un concentrat de stabilisateurs constitué par, rapportés au poids total,
A) à concurrence de 20 à 95% en poids, au moins un polyuréthane thermoplastique,
B) à concurrence de 3 à 60% en poids, du téréphtalate de diglycidyle et/ou du trimellitate de triglycidyle, et
C) à concurrence de 3 à 60% en poids, au moins un filtre éliminant l'ultraviolet du type du benzotriazole, les pour cent en poids se complétant pour donner 100.
